# EUROPEAN PATENT APPLICATION

(11) **EP 4 102 381 A1**
(43) Date of publication of application: **14.12.2022**
(21) Application number: 20917389.7
(22) Date of filing: 10.12.2020
(51) Int. Cl.: G06F 16/9535

(54) **METHOD AND APPARATUS FOR IDENTIFYING ATTRIBUTE WORD OF ARTICLE, AND DEVICE AND STORAGE MEDIUM**

(30) Priority: 06.02.2020 CN 202010081450
(71) Applicant: Beijing Wodong Tianjun Information Technology Co., Ltd., 100176 Beijing (CN)
(72) Inventor: CHANG, Jing, Beijing 100176 (CN); HE, Yang, Beijing 100176 (CN); TAO, Tong, Beijing 100176 (CN); ZHANG, Xiongwei, Beijing 100176 (CN); DUAN, Ruifeng, Beijing 100176 (CN)
(74) Representative: Vossius & Partner Patentanwälte Rechtsanwälte mbB
(86) International application number: PCT/CN2020/135351
(87) International publication number: WO 2021/155711

(57) **Abstract**

Disclosed are a method and apparatus for identifying an attribute word of an article, and a device and a storage medium, which relate to the technical field of computers. The method comprises: establishing an attribute word list (S101); acquiring article information of an article to be subjected to identification (S102); performing word segmentation on the article information (S104); identifying a word segmentation result on the basis of a preset rule (S106); when a first attribute word therein is identified, determining the similarity between the first attribute word and each standard attribute word in the preset attribute word list, so as to determine whether the first attribute word is valid (S108); when the first attribute word is invalid, or the first attribute word is not identified on the basis of the preset rule, identifying the word segmentation result on the basis of a sequence labeling model, so as to identify at least one second attribute word in the word segmentation result (S110); respectively determining the similarity between each second attribute word and each standard attribute word in the preset attribute word list (S112); and on the basis of the similarity of each second attribute word, determining a final attribute word of the article to be subjected to identification (S114). The method can increase identification efficiency.

## Description

### CROSS-REFERENCE TO RELATED APPLICATIONS

The present disclosure claims priority to Chinese Patent Application No. 202010081450.3, entitle "METHOD AND APPARATUS FOR IDENTIFYING ATTRIBUTE WORD OF ARTICLE AND DEVICE AND STORAGE MEDIUM" filed on February 06,2020, the entire contents thereof are incorporated herein by reference.

### TECHNICAL FIELD

The present disclosure relates to the field of computer technology, and in particular, to a method and device for identifying an attribute word of an article, an apparatus, and a storage medium.

### BACKGROUND

The management and application of massive data on an e-commerce platform is one of the key research directions in the industry and academia, for which the development of big data technology and artificial intelligence technology provides important technical support. In the field of e-commerce, the classification, identification, search, recommendation, and management of massive products are important and valuable research directions in the industry.

As for product identification, product search, product recommendation, identification of similar products and the like, the attribute word of a product, such as product word, brand, model and the like, is particularly important. For example, for the Mate 10 mobile phone, the product word is "mobile phone" and the model word is "Mate 10". By querying products through the attribute word such as product word or model word, the intended product may be quickly found.

The identifying method based on machine learning in the related art has low identifying efficiency and high computational cost.

It should be noted that the information disclosed in the above Background section is only for enhancement of understanding of the background of the present disclosure, and therefore may contain information that does not form the prior art that is already known to those skilled in the art.

### SUMMARY

The present disclosure is to provide a method and device for identifying an attribute word of an article, an apparatus, and a storage medium, in order to overcome, to some extent, the problems of low identifying efficiency and high computational cost in the related art.

Other features and advantages of the present disclosure will become apparent from the following detailed description, or be learned in part by practice of the present disclosure.

An aspect of the present disclosure provides a method for identifying an attribute word of an article, including: acquiring an article information of a to-be-identified article; performing word segmentation on the article information; identifying a word segmentation result based on a preset rule; determining a similarity of a first attribute word to each standard attribute word in a preset attribute word list to determine whether the first attribute word is valid when the first attribute word is acquired from the word segmentation result through identifying; identifying the word segmentation result based on a sequence labeling model to acquire at least one second attribute word from the word segmentation result when the first attribute word is invalid or when the first attribute word is not acquired through identifying based on the preset rule; respectively determining a similarity of each of the second attribute words to each standard attribute word in the preset attribute word list; and determining a final attribute word of the to-be-identified article based on the similarity of each of the second attribute words.

In an embodiment of the present disclosure, the above method further includes: determining the first attribute word as the final attribute word of the to-be-identified article when the first attribute word is valid.

In an embodiment of the present disclosure, identifying the word segmentation result based on the sequence labeling model to acquire the at least one second attribute word from the word segmentation result includes: labeling a word property of each segmented word in the word segmentation result based on the sequence labeling model; and acquiring at least one segmented word having the word property being the attribute word as the at least one second attribute word.

In an embodiment of the present disclosure, determining the final attribute word of the to-be-identified article based on the similarity of each of the second attribute words includes: selecting the second attribute word with a largest similarity as the final attribute word of the to-be-identified article.

In an embodiment of the present disclosure, the above method further includes: establishing the attribute word list.

In an embodiment of the present disclosure, the attribute word list is a mapping consisting of key-value pairs, and the key is configured to store a brand of the article, and the value is configured to store the attribute word list of a corresponding article.

In an embodiment of the present disclosure, the attribute word list is established by at least one data source of acquired attribute word data which has been labeled, acquired attribute word data which is input by a user, attribute word data which is crawled from a website.

Another aspect of the present disclosure provides a device for identifying an attribute word of an article, including: an information acquisition module, configured to acquire an article information of a to-be-identified article; an information word-segmentation module, configured to perform word segmentation on the article information; a first identification module, configured to identify a word segmentation result based on a preset rule; a first similarity determination module, configured to determine a similarity of a first attribute word to each standard attribute word in a preset attribute word list to determine whether the first attribute word is valid when the first attribute word is acquired from the word segmentation result through identifying; a second identification module, configured to identify the word segmentation result based on a sequence labeling model to acquire at least one second attribute word from the word segmentation result when the first attribute word is invalid or when the first attribute word is not acquired through identifying based on the preset rule; a second similarity determination module, configured to respectively determine a similarity of each of the second attribute words to each standard attribute word in the preset attribute word list; and an attribute word determination module, configured to determine a final attribute word of the to-be-identified article based on the similarity of each of the second attribute words.

Yet another aspect of the present disclosure provides a computer device including: a processor; and a memory for storing executable instructions by the processor, and the processor is configured to implement any one of the methods described above by executing the executable instructions.

Still another aspect of the present disclosure provides a computer-readable storage medium having computer-executable instructions stored thereon, and the executable instructions, when being executed by a processor, implement any one of the methods described above.

In the method for identifying an attribute word of an article provided by embodiments of the present disclosure, the word segmentation result is identified based on the preset rule, and then the word segmentation result in which the identified attribute word is invalid is identified again based on the sequence labeling model, which may improve the identifying efficiency of the attribute word and reduce computational cost; and the word segmentation result in which the attribute word is not acquired through identifying is identified again based on the sequence labeling model, which solve the problem of the preset rule having a low coverage.

### BRIEF DESCRIPTION OF THE DRAWINGS

The accompanying drawings, which are incorporated in and constitute a part of this specification, illustrate embodiments consistent with the present disclosure, and together with the description, serve to explain the principle of the present disclosure. Obviously, the drawings in the following description are only some embodiments of the present disclosure, and for those skilled in the art, other drawings can also be obtained from these drawings without creative efforts.
FIG. 1 is a schematic structural diagram of a computer system provided by an exemplary embodiment of the present disclosure.
FIG. 2 illustrates a flowchart of a method for identifying an attribute word of an article in an embodiment of the present disclosure.
FIG. 3 illustrates a flowchart of another method for identifying an attribute word of an article in an embodiment of the present disclosure.
FIG. 4 illustrates a flowchart of still another method for identifying an attribute word of an article in an embodiment of the present disclosure.
FIG. 5 illustrates a flowchart of still another method for identifying an attribute word of an article in an embodiment of the present disclosure.
FIG. 6 illustrates a block diagram of a device for identifying an attribute word of an article in an embodiment of the present disclosure.
FIG. 7 is a schematic structural diagram of a computer system according to an exemplary embodiment.

### DETAILED DESCRIPTION

Example embodiments will now be described more fully with reference to the accompanying drawings. Example embodiments, however, may be embodied in various forms and should not be construed as limited to the embodiments set forth herein. Rather, these embodiments are provided so that the present disclosure will be thorough and complete, and the concept of example embodiments will be fully conveyed to those skilled in the art. The described features, structures, or characteristics may be combined in any suitable manner in one or more embodiments.

Furthermore, the drawings are merely schematic illustrations of the present disclosure and are not necessarily drawn to scale. The same reference numerals in the figures denote the same or similar parts, and thus their repeated descriptions will be omitted. Some of the block diagrams shown in the drawings are functional entities that do not necessarily correspond to physically or logically separate entities. These functional entities may be implemented in software form, or in one or more hardware modules or integrated circuits, or in different networks and/or processor devices and/or microcontroller devices.

In the description of the present disclosure, the terms "first" and "second" are only used for descriptive purposes, and cannot be understood as indicating or implying relative importance or implying the number of indicated technical features. Thus, a feature defined as "first" or "second" may expressly or implicitly include one or more of that features.

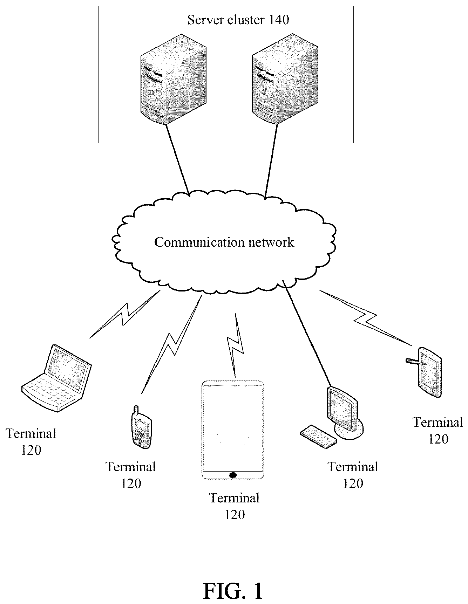

FIG. 1 is a schematic structural diagram of a computer system provided by an exemplary embodiment of the present disclosure. The system includes several terminals 120 and a server cluster 140.

The terminal 120 may be a mobile phone, a game console, a tablet computer, an e-book reader, smart glasses, a moving picture experts group audio layer IV (MP4) player, a smart home device, an augmented reality (AR) device, a virtual reality (VR) device and other mobile terminals. The terminal 120 may also be a personal computer (PC), such as a laptop computer, a desktop computer and the like.

The terminal 120 may be installed with an application program for providing a method for identifying an attribute word of an article.

The terminal 120 and the server cluster 140 are connected with each other through a communication network. Optionally, the communication network is a wired network or a wireless network.

The server cluster 140 is one server, or consists of several servers, or is a virtualization platform, or is a cloud computing service center. The server cluster 140 is used to provide background services for the application program that provides the method for identifying an attribute word of an article. Optionally, the server cluster 140 takes on a main computing work, and the terminal 120 takes on a secondary computing work; or, the server cluster 140 takes on the secondary computing work, and the terminal 120 takes on the main computing work; or the terminal 120 and the server cluster 140 perform collaborative computing using a distributed computing architecture.

In some optional embodiments, the server cluster 140 is used to store information.

Optionally, the clients of the application programs installed on different terminals 120 are the same, or the clients of the application programs installed on two terminals 120 are clients of the same type of application program on different control system platforms. Based on different terminal platforms, the specific form of the client of the application program may also be different. For example, the client of the application program may be a mobile phone client, a PC client, or a World Wide Web (or Web) client.

Those skilled in the art may know that the number of the above-mentioned terminals 120 may be more or less. For example, the number of the above-mentioned terminals may be only one, or the number of the above-mentioned terminals may be dozens or hundreds, or more. The number and type of the terminals are not limited in the embodiment of the present disclosure.

Optionally, the system may further include a management device (not shown in FIG. 1), and the management device and the server cluster 140 are connected through a communication network. Optionally, the communication network is a wired network or a wireless network.

Optionally, the above-mentioned wireless network or wired network uses standard communication technologies and/or protocols. The network is usually the Internet, but can be any network, including but not limited to Local Area Network (LAN), Metropolitan Area Network (MAN), Wide Area Network (WAN), mobile, wired or wireless network, private network, or any combination of virtual private networks. In some embodiments, data exchanged over the network is represented using technologies and/or formats including Hyper Text Mark-up Language (HTML), Extensible Markup Language (XML), and the like. In addition, all or some of links may also be encrypted using a conventional encryption technique such as Secure Socket Layer (SSL), Transport Layer Security (TLS), Virtual Private Network (VPN), Internet Protocol Security (IPsec) and the like. In some other embodiments, customized and/or dedicated data communication techniques may also be used to replace or complement the data communication techniques described above.

Hereinafter, each step of the method for identifying an attribute word of an article in an exemplary embodiment of the present disclosure will be described in more detail with reference to the accompanying drawings and embodiments.

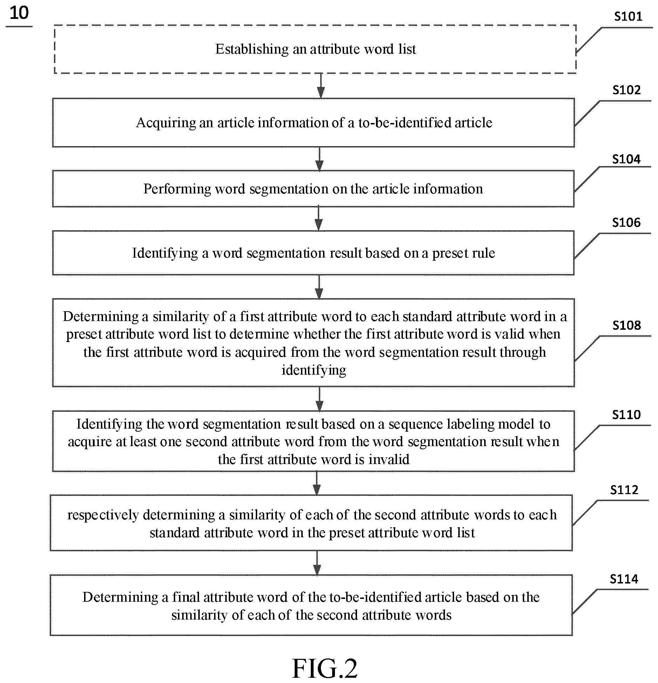

FIG. 2 illustrates a flowchart of a method for identifying an attribute word of an article in an embodiment of the present disclosure. The method provided in the embodiment of the present disclosure may be executed by any electronic device with computing processing capability, for example, the terminal 120 and/or the server cluster 140 in FIG. 1. In the following illustration, the server cluster 140 is used as the executing subject for illustration.

As shown in FIG. 2, the method 10 for identifying an attribute word of an article includes the following steps.

In step S102, an article information of a to-be-identified article is acquired.

The to-be-identified article may be, for example, a mobile phone, a computer, or a monitor. The article information includes but is not limited to an article title and an article attribute. The article attribute includes but is not limited to brand, price, weight, material, color, size, specification, style, applicable people, applicable scene, applicable season.

Table 1 is an example of some attributes of the article information.

**Table 1- example of some attributes of article information**

| **Article attribute** | **Article attribute value** |
|---|---|
| Article number | 32465653735 |
| Article title | XX P20 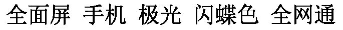 ( 6G + 64G ) (XX P20 full screen mobile phone morpho aurora All netcom (6G+64G)) |
| Brand | XX |
| Article price | 3388 |
| Article gross weight | 0.6kg |
| Body weight (g) | 165 |
| Main screen side (inches) | 5.8 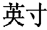 (5.8 inches) |
| Year on sale | 2018 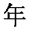 (2018) |
| Month on sale | 4 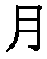 (April) |

In step S104, word segmentation is performed on the article information.

Word segmentation result of the article information may be acquired by performing the word segmentation on the article information.

For example, the word segmentation may be performed on the article title in the article information, and may also be performed on other information in the article information, which is not limited in the present disclosure.

The word segmentation may be performed on the article title using word segmentation tools, which include but are not limited to Jieba, SnowNLP, and THULAC.

Table 2 is an example of a word segmentation result of article title.

**Table 2- example of word segmentation result of article title**

| **Article title** | **Word segmentation result of Title** |
|---|---|
| XX 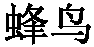 Swift3 14 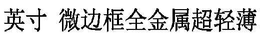 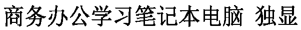 2G i5/8G/128G+1T/ 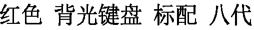 CPU 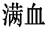 MX150 2G (XX Swift3 14-inch micro-frame all-metal ultra-thin business office learning laptop discrete video card 2G i5/8G/128G+1T/red backlit keyboard standard 8^{th} generation CPU full blood MX150 2G) | XX 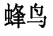 Swift3 14 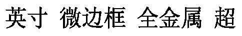 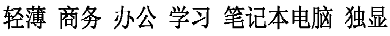 2G i5 / 8G / 128G + 1T / 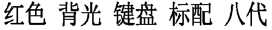 CPU 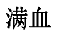 MX150 2G (XX Swift3 14-inch micro-frame all-metal ultra-thin business office learning laptop discrete video card 2G i5/8G/128G+1T/red backlit keyboard standard 8^{th} generation CPU full blood MX150 2G) |
| 4G+128G 360 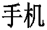 Q5 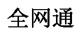 4G 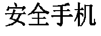 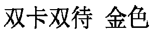 4+128G 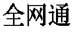 (4G+128G 360 mobile phone Q5 all netcom 4G security mobile phone dual SIM dual standby gold 4+128G all netcom) | 4G + 128G 360 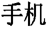 Q5 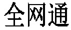 4G 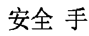 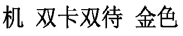 4 + 128G 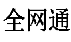 (4G+128G 360 mobile phone Q5 all netcom 4G security mobile phone dual SIM dual standby gold 4+128G all netcom) |
| XX 5 Plus 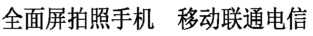 4G 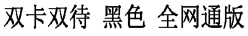 ( 4GB+64GB) (XX 5 Plus full screen camera phone Mobile Unicom Telecom 4G dual SIM dual standby black all netcom version (4GB+64GB)) | xx 5 Plus 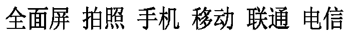 4G 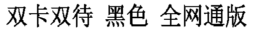 ( 4GB + 64GB ) (XX 5 Plus full screen camera phone Mobile Unicom Telecom 4G dual SIM dual standby black all netcom version (4GB+64GB)) |
| XX 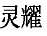 S4200U 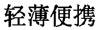 14 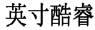 8 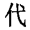 i5 i7 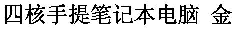 I7-8550U/MX150-2G 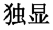 8G/128G 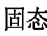 +500G 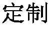 (XX Deluxe S4200U lightweight portable 14-inch Core 8^{th} generation i5 i7 quad-core notebook laptop computer gold 17-8550U/MX150-2G discrete video card 8G/128G solid state + 500G customization) | XX 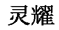 S4200U 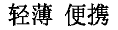 14 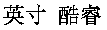 8 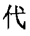 i5 i7 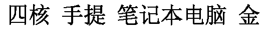 I7 - 8550U / MX150 - 2G 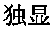 8G / 128G 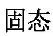 + 500G 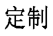 (XX Deluxe S4200U lightweight portable 14-inch Core 8^{th} generation i5 i7 quad-core notebook laptop computer gold 17-8550U/MX150-2G discrete video card 8G/128G solid state + 500G customization) |

In step 106, a word segmentation result is identified based on a preset rule.

The word segmentation result of the article information is identified based on the preset rule, and the word segmentation result may be shown in Table 1, for example.

The preset rule may be, for example, a truncation title rule, and those skilled in the art may also use other rules, which is not limited in the present disclosure.

In step S 108, when a first attribute word is acquired from the word segmentation result through identifying, a similarity of the first attribute word to each standard attribute word in a preset attribute word list is determined to determine whether the first attribute word is valid.

When it is identified by identifying the word segmentation result that the word segmentation result contains the first attribute word, the similarity of the first attribute word to each standard attribute word in the preset attribute word list is calculated, and according to the calculated similarity, it is determined whether the first attribute word is valid.

The method for calculating the similarity may be, for example, cosine similarity, edit distance, or improved Jaro-Winkler algorithm.

The attribute word may be, for example, a model word, a brand word, or a product word.

By taking the attribute word as the model word as an example, the model word refers to a set of codes used to identify a type of product, which consists of a number and a letter or other codes. The model word is a reference to a product, and is an attribute having a finer granularity than the product word and the brand word. The model word plays an important role in application scenarios such as product identification, product recommendation, product search, and identification of similar products.

For the article having the model word, the model word is a very important attribute of the article due to its finer granularity and the specificity it refers to the article. In user's search, browsing and other behaviors, the model word is also one of the attributes most concerned by the user, therefore the model word plays an important role in e-commerce search, recommendation and other business scenarios. In the search business, when searching for an article, displaying the model word as a highlight attribute under the article title may improve the user experience, and searching for the model word directly can match to the article represented by the model word with higher accuracy. In the recommendation business, recommending a plurality of accessories suitable for the same type of article for the user may better meet the needs and interests of the user, and filtering out articles of the same type as that the user has already purchased can not only free up more recommendation places, but also can enhance the user experience.

Table 3 is an example of the model words identified based on the rule and whether they are valid or not.

**Table 3 - example of model words identified based on rule**

| **Word segmentation result of article title** | **Model word** | **Valid or not** |
|---|---|---|
| XX ( MI ) XX 5 Plus 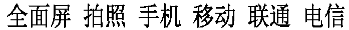 4G 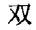 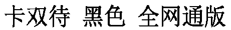 ( 4GB + 64GB ) (XX ( MI ) XX 5 Plus full screen camera phone Mobile Unicom Telecom 4G dual SIM dual standby black all netcom version ( 4GB + 64GB )) | XX 5Plus | Yes |
| XX ( Lenovo ) ideapad320 15.6 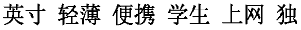 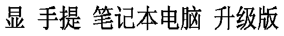 : A6 4G 1T 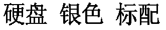 (XX (Lenovo) ideapad320 15.6 inch thin and light portable student surfing Internet discrete video card portable laptop computer upgrade version: A6 4G 1T hard disk silver standard) | ideapad320 | Yes |
| 4G + 128G 360 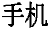 Q5 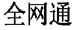 4G 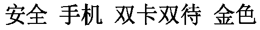 4 + 128G 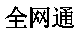 (4G + 128G 360 mobile phone Q5 all netcom 4G security mobile phone dual SIM dual standby gold 4 + 128G all netcom) | +128G360 | No |
| XX ( meitu ) Meitu 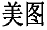 M8 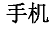 HelloKitty 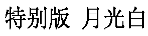 [ 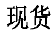 ] (XX ( meitu ) Meitu Meitu M8 mobile phone HelloKitty special edition moonlight white [spot goods]) | Meitu | No |

As can be seen from Table 3, the word segmentation results of the article titles in the article information are identified, and the identified model words "XX 5Plus", "ideapad320", "+128G360", "Meitu" are obtained. By calculating the similarities of these model words to the standard model words in the model word list, it may determine that "XX 5Plus" and "ideapad320" are valid model words, and "+128G360" and "Meitu" are invalid model words.

In step S110, when the first attribute word is invalid, the word segmentation result is identified based on a sequence labeling model to acquire at least one second attribute word from the word segmentation result.

The word segmentation result of the article information is identified based on the preset rule, in which case there is a possibility of that the identified attribute word is not the real attribute word of the article.

By taking the attribute word as the model word as an example, when the identified model word is invalid, the word segmentation result is identified again based on the sequence labeling model, which may acquire one or more model words. When a plurality of model words are acquired through identifying, the plurality of model words may be used as a set of model word candidates.

The sequence labeling model may be, for example, a CRF (Conditional Random Field) model, and a BiLSTM-CRF (Bi-directional Long Short-Term Memory-Conditional Random Field) model.

It can be seen from Table 3 that "+128G360" and "Meitu" are invalid model words, then the word segmentation results of the article titles are identified based on the sequence labeling model.

After the word segmentation result is identified based on the preset rule, re-identifying the word segmentation result in which the identified attribute word is invalid based on the sequence labeling model may improve the identification efficiency.

In step S112, a similarity of each of the second attribute words to each standard attribute word in the preset attribute word list is determined respectively.

By still taking the attribute word as the model word as an example, the similarity of each model word identified by the sequence labeling model to each standard model word in the preset model word list is calculated. The method for calculating the similarity may be, for example, cosine similarity, edit distance, or improved Jaro-Winkler algorithm.

In step S114, a final attribute word of the to-be-identified article is determined based on the similarity of each of the second attribute words.

For example, the similarities of respective second attribute words may be compared to determine one of the plurality of second attribute words as the final attribute word of the article.

In some embodiments, the second attribute word with the greatest similarity is selected as the final attribute word of the to-be-identified article.

For example, the similarities of the respective second attribute words are 0.8, 0.9, 0.7 in sequence, and the second attribute word with the highest similarity is selected as the final attribute word of the to-be-identified article, that is, the second attribute word with the similarity of 0.9 is selected as the final attribute word.

In some embodiments, the method 10 further includes:
step S101, establishing an attribute word list.

The attribute word list may be established, for example, as needed.

In some embodiments, the attribute word list is a mapping consisting of key-value pairs, the key is used to store a brand of the article, and the value is used to store the attribute word list of a corresponding article.

For example, the key may be a brand word, such as a brand of a mobile phone, a brand of a computer and the like; and the value may be an attribute word, such as "ideapad320".

In some embodiments, the attribute word list is established by at least one data source of acquired attribute word data which has been labeled, acquired attribute word data which is input by a user, attribute word data which is crawled from a website.

By acquiring the attribute word data which has been labeled, a basic attribute word list may be acquired; and by acquiring the attribute word which is input by the user and the attribute word which is crawled from the website, the attribute word that is more popular with the user and the attribute word of a new product may be acquired. The website include social networking websites, news websites, brand official websites and the like.

In an embodiment of the present disclosure, by establishing the attribute word list through information acquired from a plurality of sources, the completeness of the attribute word list may be improved; and by establishing the attribute word list through the information acquired from the website, the timeliness of the attribute word list may be improved and the cost for updating the word list may be reduced.

In some embodiments, the step S101 further includes: filtering the attribute word list.

For example, the attribute word list may be filtered through the regular expression, a self-defined rule to obtain a final attribute word list.

A word which is not an attribute word may be obtained through website information and user input information, and subsequent identification may be made more accurate by filtering the attribute word list.

In the method for identifying an attribute word of an article provided by embodiments of the present disclosure, the word segmentation result is identified based on the preset rule, and then the word segmentation result in which the identified attribute word is invalid is identified again based on the sequence labeling model, which may improve the identifying efficiency of the attribute word and reduce computational cost.

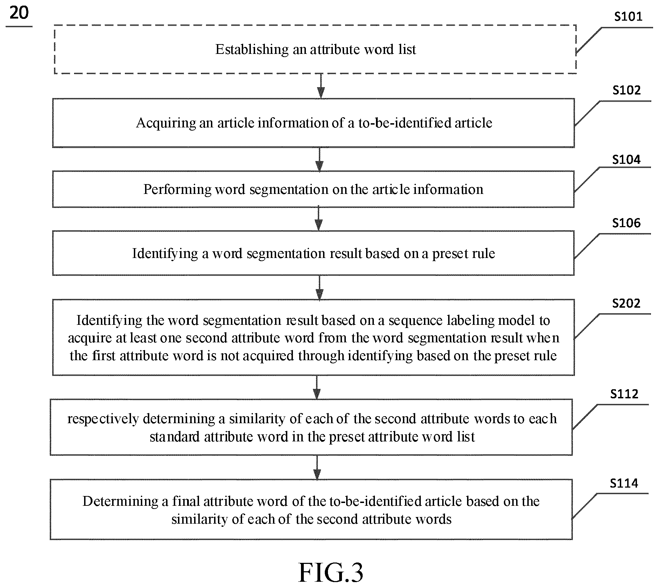

FIG. 3 illustrates a flowchart of another method for identifying an attribute word of an article in an embodiment of the present disclosure.

The method 20 for identifying an attribute word of an article shown in FIG. 3 is different from the method 10 shown in FIG. 2 in that after step S106, the method 20 further includes:
step S202, identifying the word segmentation result based on a sequence labeling model to acquire at least one second attribute word from the word segmentation result when the first attribute word is not acquired through identifying based on the preset rule.

The word segmentation result of the article information is identified based on the preset rule, in which case there is a possibility of that the attribute word is not acquired through identifying.

By taking the attribute word as the model word as an example, when the model word is not acquired through identifying, the word segmentation result is identified again based on the sequence labeling model, which may acquire one or more model words. When a plurality of model words are acquired through identifying, the plurality of model words may be used as a set of model word candidates.

The sequence labeling model may be, for example, a CRF (Conditional Random Field) model, and a BiLSTM-CRF (Bi-directional Long Short-Term Memory-Conditional Random Field) model.

In the method for identifying an attribute word of an article provided by embodiments of the present disclosure, the word segmentation result in which the attribute word is not acquired through identifying is identified again based on the sequence labeling model, which solve the problem of the preset rule having a low coverage.

The same steps of the method 20 for identifying an attribute word of an article as that of the method 10 for identifying an attribute word of an article are not repeated here.

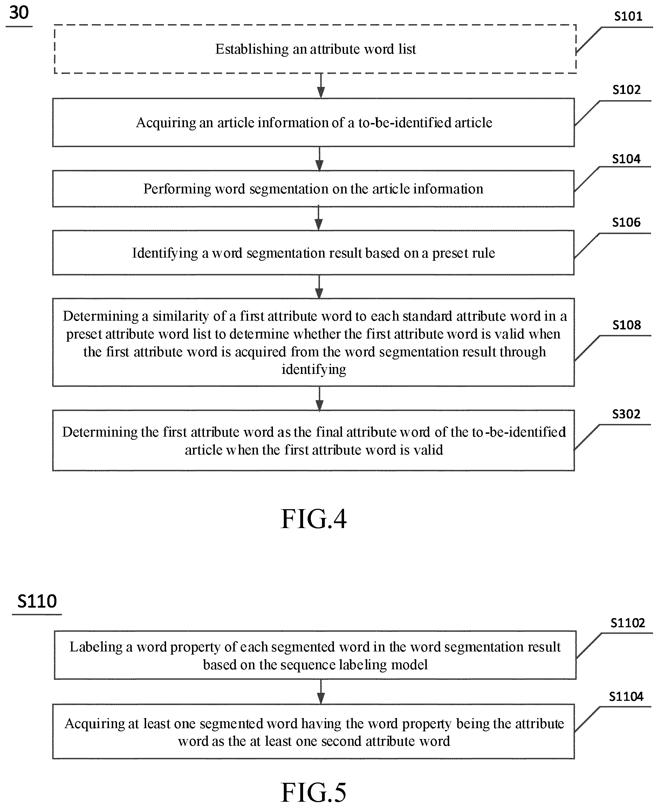

FIG. 4 illustrates a flowchart of still another method for identifying an attribute word of an article in an embodiment of the present disclosure.

The method 30 for identifying an attribute word of an article shown in FIG. 4 is different from the method 10 shown in FIG. 2 in that after step S108, the method 30 further includes:
step S302, determining the first attribute word as the final attribute word of the to-be-identified article when the first attribute word is valid

When the word segmentation result of the article information is identified based on the preset rule, and it is determined by calculating the similarity that the identified first attribute word is valid, the first attribute word may be determined as the final attribute word.

In the method for identifying an attribute word of an article provided by embodiments of the present disclosure, the final attribute word of the to-be-identified article may be acquired by identifying the word segmentation result based on the preset rule without re-identifying the word segmentation result based on the model, which can the identifying efficiency.

The same steps of the method 30 for identifying an attribute word of an article as that of the method 10 for identifying an attribute word of an article are not repeated here.

The steps of the item attribute word identification method 30 and the item attribute word identification method 10 are not repeated here.

FIG. 5 illustrates a flowchart of a method for identifying an attribute word of an article in an embodiment of the present disclosure. Different from the above methods for identifying an attribute word of an article, the method for identifying an attribute word of an article in FIG. 5 further provides how to identify the word segmentation result based on the sequence labeling model to acquire at least one second attribute word from the word segmentation result, i.e., provides an embodiment of the above step S110.

Referring to FIG. 5, step S110 includes the following steps.

In step S 1102, a word property of each segmented word in the word segmentation result is labeled based on the sequence labeling model.

The sequence labeling model may be, for example, a CRF (Conditional Random Field) model and a BiLSTM-CRF (Bi-directional Long Short-Term Memory- Conditional Random Field) model.

The word property of each segmented word in the word segmentation result is labeled based on the sequence labeling model. For example, when the segmented word is " 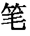 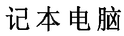 (notebook computer)", it may be labeled as "product word"; and when the segmented word is "IdeaPad320 N3450", it may be labeled as "model word".

By taking the word segmentation result as "XX IdeaPad320 N3450 15.6 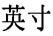 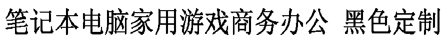 : 8G 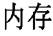 500G 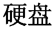 2G 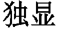 2G 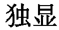 (XX IdeaPad320 N3450 15.6-inch notebook computer home game business office black customization: 8G memory 500G hard disk 2G discrete video card 2G discrete video card)" as an example, Table 4 shows an example of a word property labelling result obtained by step S1102.

**Table 4 - example of word property labelling result of segmented words of article title**

| **Segmented word of article title** | **Property according to segmented word** |
|---|---|
| 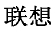 (Lenovo) | Brand word |
| IdeaPad320 N3450 | Model word |
| 15.6 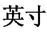 (15.6-inch) | Specification property |
| 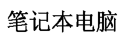 (notebook computer) | Product word |
| 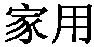 (home) | Scenario property |
| 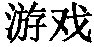 (game) | Scenario property |
| 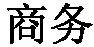 (business) | People property |
| 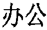 (office) | Scenario property |
| 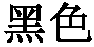 (black) | Color property |
| 8G 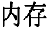 (8G memory) | Specification property |
| 500G 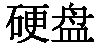 (500G hard disk) | Specification property |
| 2G 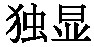 (2G discrete video card) | Specification property |
| 2G 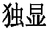 (2G discrete video card) | Specification property |

In step S 1104, at least one segmented word having the word property being the attribute word is acquired as the at least one second attribute word.

By taking the attribute word as the model word as an example, it can be seen from Table 4 that the segmented word "IdeaPad320 N3450" with the word property of the model word may be used as the model word of the article.

When there are a plurality of segmented words having the word property being the model word, the plurality of segmented words may be used as the model word candidate set, and then the final model word may be determined by calculating the similarity between each model word in the candidate set and the standard model word in the preset model word list.

It should be noted that the above-mentioned drawings are only schematic illustrations of the processes included in the method according to the exemplary embodiment of the present disclosure, and are not intended to be limiting. It is readily understood that the processes shown in the above drawings do not indicate or limit the chronological order of these processes. In addition, it is also readily understood that these processes may be performed synchronously or asynchronously, for example, in a plurality of modules.

The following are a device embodiment of the present disclosure, which can be used to execute the method embodiment of the present disclosure. For details not disclosed in the device embodiment of the present disclosure, please refer to the method embodiment of the present disclosure.

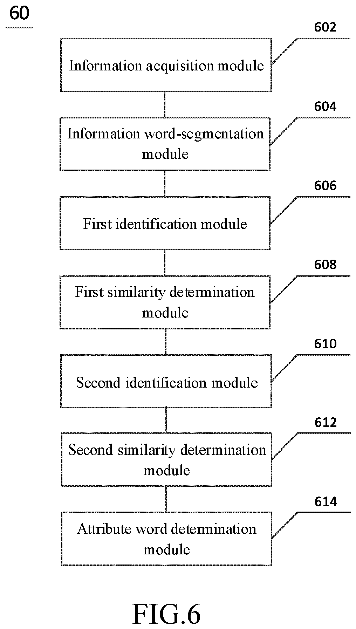

FIG. 6 illustrates a block diagram of a device for identifying an attribute word of an article in an embodiment of the present disclosure.

As shown in FIG. 6, the device 60 for identifying an attribute word of an article includes: an information acquisition module 602, an information word-segmentation module 604, a first identification module 606, a first similarity determination module 608, a second identification module 610, a second similarity determination module 612 and an attribute word determination module 614.

The information acquisition module 602 is configured to acquire an article information of a to-be-identified article.

The information word-segmentation module 604 is configured to perform word segmentation on the article information.

The first identification module 606 is configured to identify a word segmentation result based on a preset rule.

The first similarity determination module 608 is configured to determine a similarity of a first attribute word to each standard attribute word in a preset attribute word list to determine whether the first attribute word is valid when the first attribute word is acquired from the word segmentation result through identifying.

The second identification module 610 is configured to identify the word segmentation result based on a sequence labeling model to acquire at least one second attribute word from the word segmentation result when the first attribute word is invalid or when the first attribute word is not acquired through identifying based on the preset rule.

The second similarity determination module 612 is configured to respectively determine a similarity of each of the second attribute words to each standard attribute word in the preset attribute word list.

The attribute word determination module 614 is configured to determine a final attribute word of the to-be-identified article based on the similarity of each of the second attribute words.

In some embodiments, the device 60 further includes a second attribute word determination module, configured to determine the first attribute word as the final attribute word of the to-be-identified article when the first attribute word is valid.

In some embodiments, the second identification module 610 includes a word property labeling unit and a segmented word acquiring unit. The word property labeling unit is configured to label a word property of each segmented word in the word segmentation result based on the sequence labeling model; and to acquire at least one segmented word having the word property being the attribute word as the at least one second attribute word.

In some embodiments, the attribute word determination module 614 includes an attribute word determination unit configured to s select the second attribute word with a largest similarity as the final attribute word of the to-be-identified article.

In some embodiments, the device 60 further includes a word list establishing module configured to establish the attribute word list.

In some embodiments, the attribute word list is a mapping consisting of key-value pairs, and the key is configured to store a brand of the article, and the value is configured to store the attribute word list of a corresponding article.

In some embodiments, the attribute word list is established by at least one data source of acquired attribute word data which has been labeled, acquired attribute word data which is input by a user, attribute word data which is crawled from a website.

In the device for identifying an attribute word of an article provided by embodiments of the present disclosure, the word segmentation result is identified based on the preset rule, and then the word segmentation result in which the identified attribute word is invalid is identified again based on the sequence labeling model, which may improve the identifying efficiency of the attribute word and reduce computational cost; and the word segmentation result in which the attribute word is not acquired through identifying is identified again based on the sequence labeling model, which solve the problem of the preset rule having a low coverage.

It should be noted that the block diagrams shown in the above figures are functional entities which do not necessarily correspond to physically or logically independent entities. These functional entities may be implemented in software form, or in one or more hardware modules or integrated circuits, or in different networks and/or processor devices and/or microcontroller devices.

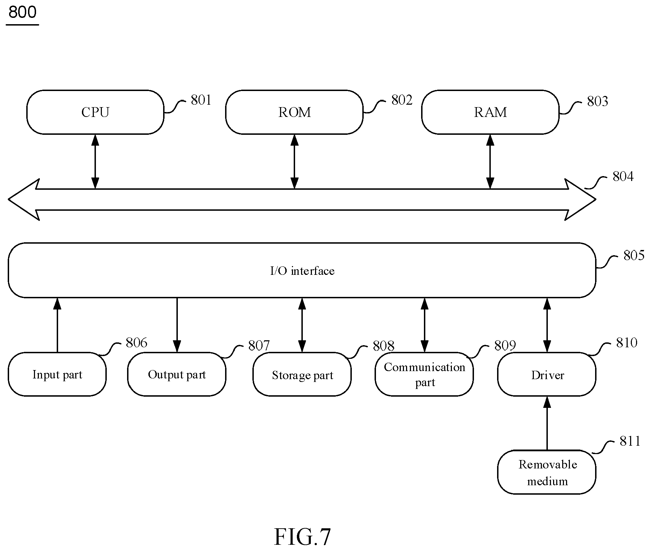

FIG. 7 is a schematic structural diagram of a computer system according to an exemplary embodiment. It should be noted that the computer system shown in FIG. 7 is only an example, and should not limit the function and use scope of the embodiments of the present disclosure.

As shown in FIG. 7, a computer system 800 includes a central processing unit (CPU) 801, and the CPU 801 may perform various appropriate actions and processes according to a program stored in a read only memory (ROM) 802 or a program loaded into a random access memory (RAM) 803 from a storage part 808. In the RAM 803, various programs and data necessary for the operation of the system 800 are also stored. The CPU 801, ROM 802, and RAM 803 are connected to each other through a bus 804. An input/output (I/O) interface 805 is also connected to bus 804.

The following components are connected to the I/O interface 805: an input part 806 including a keyboard, a mouse, and the like; an output part 807 including a cathode ray tube (CRT), a liquid crystal display (LCD), a speaker and the like; the storage part 808 including a hard disk and the like; and a communication part 809 including a network interface card such as a LAN card, a modem, and the like. The communication part 809 performs communication processing via a network such as the Internet. A driver 810 is also connected to the I/O interface 805 as needed. A removable medium 811, such as a magnetic disk, an optical disk, a magneto-optical disk, a semiconductor memory and the like, is mounted on the driver 810 as needed so that a computer program read therefrom is installed into the storage part 808 as needed.

In particular, the processes described above with reference to the flowcharts may be implemented as computer software programs according to an embodiment of the present disclosure. For example, an embodiment of the present disclosure includes a computer program product including a computer program carried on a computer-readable medium, and the computer program contains program codes for performing the method illustrated in the flowchart. In such an embodiment, the computer program may be downloaded and installed from the network via the communication part 809, and/or installed from the removable medium 811. When the computer program is executed by the central processing unit (CPU) 801, the above-described functions defined in the system of the present disclosure are performed.

It should be noted that the computer-readable medium shown in the present disclosure may be a computer-readable signal medium or a computer-readable storage medium, or any combination thereof. The computer-readable storage medium may be, for example, but is not limited to, an electrical, magnetic, optical, electromagnetic, infrared, or semiconductor system, apparatus or device, or an any combination thereof. More specific examples of computer readable storage media may include, but are not limited to, electrical connection with one or more wires, portable computer disk, hard disk, random access memory (RAM), read only memory (ROM), erasable programmable read only memory (EPROM or flash memory), optical fiber, portable compact disk read only memory (CD-ROM), optical storage device, magnetic storage device, or any suitable combination thereof. In the present disclosure, the computer-readable storage medium may be any tangible medium that contains or stores a program that can be used by or in conjunction with an instruction execution system, apparatus, or device. In the present disclosure, the computer-readable signal medium may include a data signal propagated in baseband or as part of a carrier wave, in which a computer-readable program code is carried. Such propagated data signal may take a variety of forms, including but not limited to electromagnetic signal, optical signal, or any suitable combination thereof. The computer-readable signal medium may also be any computer-readable medium other than the computer-readable storage medium, and the computer-readable medium may transmit, propagate, or transport the program for use by or in connection with the instruction execution system, apparatus, or device. The program code included in the computer readable medium may be transmitted using any suitable medium including, but not limited to, wireless, wireline, optical fiber cable, RF, etc., or any suitable combination thereof.

The flowchart and block diagram in the drawings illustrate the architecture, functionality, and operation of possible implementations of systems, methods and computer program products according to various embodiments of the present disclosure. In this regard, each block in the flowchart or block diagram may represent a module, segment, or a portion of code that contains one or more executable instructions for implementing the specified logical functions. It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It is also noted that each block of the block diagram or flowchart, and a combination of blocks in the block diagram or flowchart, may be implemented in a dedicated hardware-based system that performs a specified function or operation, or may be implemented using a combination of a dedicated hardware and a computer instruction.

The unit involved in the embodiment of the present disclosure may be implemented in a software manner, and may also be implemented in a hardware manner. The described unit may also be provided in a processor, for example, it may be described as: a processor includes a sending unit, an acquiring unit, a determining unit and a first processing unit. The names of these units do not constitute a limitation on the unit itself under certain circumstances. For example, the sending unit may also be described as "a unit that sends a request for acquiring pictures to a connected server".

As another aspect, the present disclosure also provides a computer-readable medium, which may be included in the device described in the above embodiments; or may exist alone without being assembled into the device. The above-mentioned computer-readable medium carries one or more programs that when being executed by a device, causes the device to:
acquire an article information of a to-be-identified article;
perform word segmentation on the article information;
identify a word segmentation result based on a preset rule;
determine a similarity of a first attribute word to each standard attribute word in a preset attribute word list to determine whether the first attribute word is valid when the first attribute word is acquired from the word segmentation result through identifying;
identify the word segmentation result based on a sequence labeling model to acquire at least one second attribute word from the word segmentation result when the first attribute word is invalid or when the first attribute word is not acquired through identifying based on the preset rule;
respectively determine a similarity of each of the second attribute words to each standard attribute word in the preset attribute word list; and
determine a final attribute word of the to-be-identified article based on the similarity of each of the second attribute words.

Exemplary embodiments of the present disclosure have been specifically shown and described above. It should be understood that the present disclosure is not limited to the details of construction, arrangement, or implementation described herein; on the contrary, the present disclosure is intended to cover various modifications and equivalent arrangements included within the spirit and scope of the appended claims.

## Claims

1. A method for identifying an attribute word of an article, comprising:
acquiring an article information of a to-be-identified article;
performing word segmentation on the article information;
identifying a word segmentation result based on a preset rule;
determining a similarity of a first attribute word to each standard attribute word in a preset attribute word list to determine whether the first attribute word is valid when the first attribute word is acquired from the word segmentation result through identifying;
identifying the word segmentation result based on a sequence labeling model to acquire at least one second attribute word from the word segmentation result when the first attribute word is invalid or when the first attribute word is not acquired through identifying based on the preset rule;
respectively determining a similarity of each of the second attribute words to each standard attribute word in the preset attribute word list; and
determining a final attribute word of the to-be-identified article based on the similarity of each of the second attribute words.

2. The method according to claim 1, further comprising:
determining the first attribute word as the final attribute word of the to-be-identified article when the first attribute word is valid.

3. The method according to claim 1, wherein identifying the word segmentation result based on the sequence labeling model to acquire the at least one second attribute word from the word segmentation result comprises:
labeling a word property of each segmented word in the word segmentation result based on the sequence labeling model; and
acquiring at least one segmented word having the word property being the attribute word as the at least one second attribute word.

4. The method according to claim 1, wherein determining the final attribute word of the to-be-identified article based on the similarity of each of the second attribute words comprises:
selecting the second attribute word with a largest similarity as the final attribute word of the to-be-identified article.

5. The method according to any one of claims 1 to 4, further comprising: establishing an attribute word list.

6. The method according to claim 5, wherein the attribute word list is a mapping consisting of key-value pairs, and
wherein the key is configured to store a brand of the article, and the value is configured to store the attribute word list of a corresponding article.

7. The method according to claim 5, wherein the attribute word list is established by at least one data source of acquired attribute word data which has been labeled, acquired attribute word data which is input by a user, attribute word data which is crawled from a website.

8. A device for identifying an attribute word of an article, comprising:
an information acquisition module, configured to acquire an article information of a to-be-identified article;
an information word-segmentation module, configured to perform word segmentation on the article information;
a first identification module, configured to identify a word segmentation result based on a preset rule;
a first similarity determination module, configured to determine a similarity of a first attribute word to each standard attribute word in a preset attribute word list to determine whether the first attribute word is valid when the first attribute word is acquired from the word segmentation result through identifying;
a second identification module, configured to identify the word segmentation result based on a sequence labeling model to acquire at least one second attribute word from the word segmentation result when the first attribute word is invalid or when the first attribute word is not acquired through identifying based on the preset rule;
a second similarity determination module, configured to respectively determine a similarity of each of the second attribute words to each standard attribute word in the preset attribute word list; and
an attribute word determination module, configured to determine a final attribute word of the to-be-identified article based on the similarity of each of the second attribute words.

9. A computer device comprising: a memory, a processor, and executable instructions stored in the memory and executable in the processor, wherein the processor, when executing the executable instructions, implements the method according to any one of claims 1 to 7.

10. A computer-readable storage medium having computer-executable instructions stored thereon, wherein the executable instructions, when being executed by a processor, implement the method according to any one of claims 1 to 7.
